# EUROPEAN PATENT SPECIFICATION

(11) **EP 3 988 403 B1**
(45) Date of publication and mention of the grant of the patent: **24.04.2024**
(21) Application number: 21201250.4
(22) Date of filing: 06.10.2021
(51) Int. Cl.: B60S 1/48, B60S 1/56, G01S 17/931

(54) **APPARATUS AND METHOD FOR CLEANING OBJECT DETECTING SENSOR**
VORRICHTUNG UND VERFAHREN ZUR REINIGUNG VON OBJEKTERFASSUNGSSENSOREN
APPAREIL ET PROCÉDÉ DE NETTOYAGE D'UN CAPTEUR DE DÉTECTION D'OBJETS

(30) Priority: 22.10.2020 KR 20200137821
(43) Date of publication of application: 27.04.2022
(73) Proprietor: Hyundai Mobis Co., Ltd., Gangnam-gu Seoul 06141 (KR)
(72) Inventor: KIM, Won Gyum, 16891 Gyeonggi-do (KR); JO, Sung Eun, 16891 Gyeonggi-do (KR); KIM, Young Shin, 16891 Gyeonggi-do (KR); KIM, Kyung Rin, 16891 Gyeonggi-do (KR)
(74) Representative: dompatent von Kreisler Selting Werner - Partnerschaft von Patent- und Rechtsanwälten mbB

(56) References cited:
- WO-A1-2019/172306
- WO-A1-2019/176607
- DE-A1-102012 218 583
- DE-A1-102019 125 303
- US-A1- 2019 351 461
- US-B1- 10 173 646

## Description

### CROSS-REFERENCE TO RELATED APPLICATION

This application claims the benefit of priority to Korean Patent Application No. 10-2020-0137821, filed in the Korean Intellectual Property Office on October 22, 2020.

### TECHNICAL FIELD

The present disclosure relates to an apparatus and a method for cleaning an object detecting sensor, and more particularly, to an apparatus and a method for cleaning an object detecting sensor, by which a control period time (CPT) of a lidar window cleaning nozzle is adjusted in consideration of a driving state of a vehicle.

### BACKGROUND

Various sensors, cameras, electronic devices, and the like are mounted on a vehicle to improve a safety technology of the vehicle, driving convenience of a driver, and the like.

In recent years, researches and developments on an advanced driver assistance system (ADAS), an autonomous vehicle, and the like have been actively made.

In order to effectively enhance the safety technology of the vehicle, the enhancement of the driving convenience of the driver, and the like, it is necessary to accurately recognize an external environment of a vehicle, such as surrounding contours of the vehicle, surrounding vehicles, people, road conditions, and the like when the vehicle travels or is parked, and to achieve this, lidar sensors are mounted on a front bumper, a roof, and the like of the vehicle.

In particular, various foreign substances (worms, mud, vinyl, and the like) may be attached to a surface of a lidar sensor mounted on a front side of a vehicle, and a detection performance of the lidar sensor may be lowered by the foreign substances, and thus it is necessary to clean the surface of the lidar sensor.

The conventional lidar sensor cleaning apparatus is configured to clean a surface of a lidar sensor by ejecting a fluid (water, a washer liquid, or the like) of a high pressure from a cleaning nozzle to the surface of the lidar sensor, but a washing liquid cannot be efficiently used so that the washing liquid may be consumed rapidly. WO 2019/172306 A1 discloses a vehicle cleaner system with a driving environment acquirer configured to acquire driving environment information of a vehicle, a cleaning nozzle configured to eject a washing liquid for cleaning the object detecting sensor and a controller configured to acquire vehicle speed information, to compare the vehicle speed information to a predetermined value and to choose between two operation modes.

### SUMMARY

The present disclosure has been made to solve the above-mentioned problems occurring in the prior art while advantages achieved by the prior art are maintained intact.

The invention is set out in the appended set of claims.

An aspect of the present disclosure provides an apparatus and a method for cleaning an object detecting sensor, by which a washing liquid may be efficiently used by adjusting a control period time (CPT) of a lidar window cleaning nozzle in consideration of a driving state of a vehicle.

The technical problems to be solved by the present inventive concept are not limited to the aforementioned problems, and any other technical problems not mentioned herein will be clearly understood from the following description by those skilled in the art to which the present disclosure pertains.

According to an aspect of the present disclosure, an apparatus for cleaning an object detecting sensor includes a driving environment acquirer that acquires driving environment information of a vehicle, a cleaning nozzle that ejects a washing liquid for cleaning the object detecting sensor according to an operation period thereof that is set based on the driving environment information, and a controller that calculates a driving state score of the vehicle based on the driving environment information and set the operation period of the cleaning nozzle based on the driving state score.

According to the invention, the driving environment information includes at least one of a location and a speed of the vehicle based on navigation, a speed of the vehicle based on a speed sensor, or a traffic situation based on vehicle-to-everything communication (V2X).

In an embodiment, the object detecting sensor may include a lidar sensor.

In an embodiment, the washing liquid may be a mixture of a volatile washing liquid and a nonvolatile washing liquid.

In an embodiment, the controller may set the operation period of the cleaning nozzle to be shorter as the driving state score becomes higher.

According to the invention, the controller calculates the driving state score by combining a score given according to the location of the vehicle, a score given according to a speed of the vehicle, and a score given according to the traffic situation around the vehicle.

According to an aspect of the present disclosure, a method for cleaning an object detecting sensor includes acquiring driving environment information of a vehicle, calculating a driving state score of the vehicle based on the driving environment information, setting an operation period of a cleaning nozzle based on the driving state score, and ejecting a washing liquid for cleaning the object detecting sensor according to the operation period.

According to the invention, the acquiring of the driving environment information of the vehicle includes acquiring at least one of a location a speed of the vehicle based on navigation, a speed of the vehicle based on a speed sensor, or a traffic situation based on vehicle-to-everything communication (V2X).

According to the invention, the calculating of the driving state score of the vehicle based on the driving environment information includes calculating the driving state score by combining a score given according to the location of the vehicle, a score given according to a speed of the vehicle, and a score given according to the traffic situation around the vehicle.

In an embodiment, the setting of the operation period of the cleaning nozzle based on the driving state score may include setting the operation period of the cleaning nozzle to be shorter as the driving state score becomes higher.

### BRIEF DESCRIPTION OF THE DRAWINGS

The above and other objects, features and advantages of the present disclosure will be more apparent from the following detailed description taken in conjunction with the accompanying drawings:
FIG. 1 is a view illustrating a vehicle, in which a lidar sensor is disposed, according to an embodiment of the present disclosure;
FIG. 2 is a view illustrating a schematic configuration of a lidar sensor according to an embodiment of the present disclosure;
FIG. 3 is a block diagram illustrating a vehicle, in which a lidar sensor is disposed, according to an embodiment of the present disclosure;
FIG. 4 is a view illustrating a state score for setting a control period of an apparatus for cleaning a lidar sensor according to an embodiment of the present disclosure; and
FIG. 5 is a flowchart illustrating a method for cleaning a lidar sensor according to an embodiment of the present disclosure.

### DETAILED DESCRIPTION

Hereinafter, some embodiments of the present disclosure will be described in detail with reference to the exemplary drawings. Throughout the specification, it is noted that the same or like reference numerals denote the same or like components even though they are provided in different drawings. Further, in the following description of the present disclosure, a detailed description of known functions and configurations incorporated herein will be omitted when it may make the subject matter of the present disclosure rather unclear.

The terms, such as first, second, A, B, (a), (b) or the like may be used herein when describing components of the present disclosure. The terms are provided only to distinguish the components from other components, and the essences, sequences, orders, and the like of the components are not limited by the terms. In addition, unless defined otherwise, all terms used herein, including technical or scientific terms, have the same meanings as those generally understood by those skilled in the art to which the present disclosure pertains. The terms defined in the generally used dictionaries should be construed as having the meanings that coincide with the meanings of the contexts of the related technologies, and should not be construed as ideal or excessively formal meanings unless clearly defined in the specification of the present disclosure.

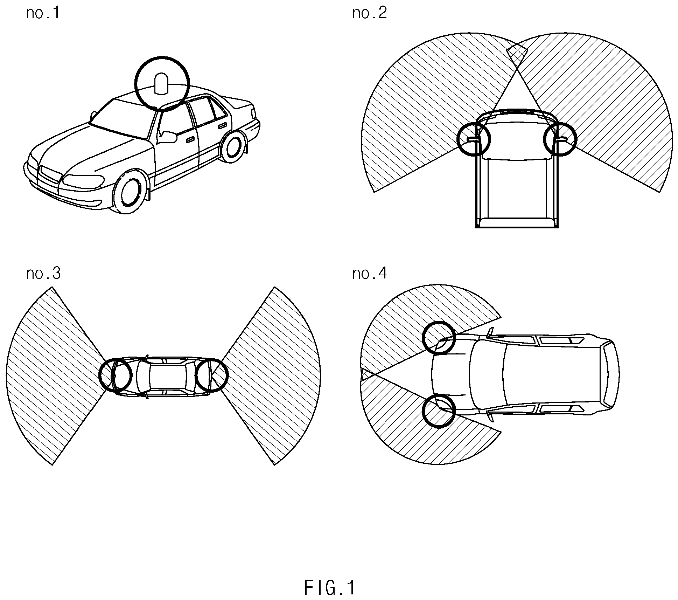

Hereinafter, embodiments of the present disclosure will be described in detail with reference to FIGS. 1 to 4.

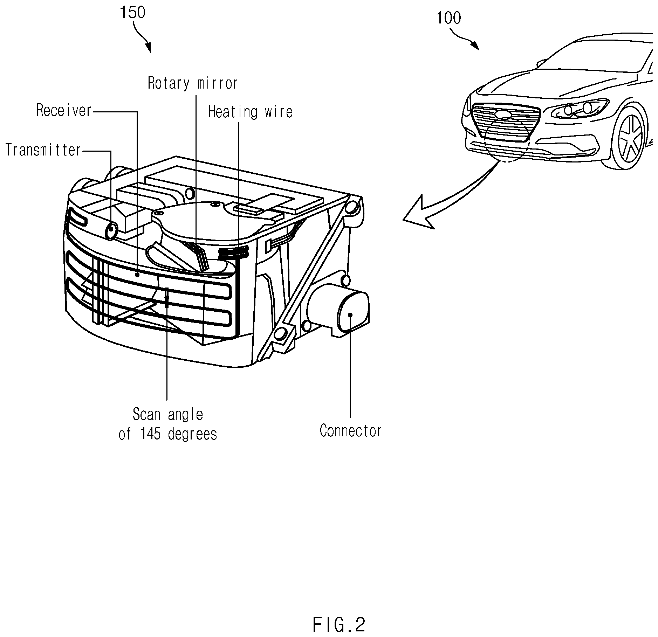

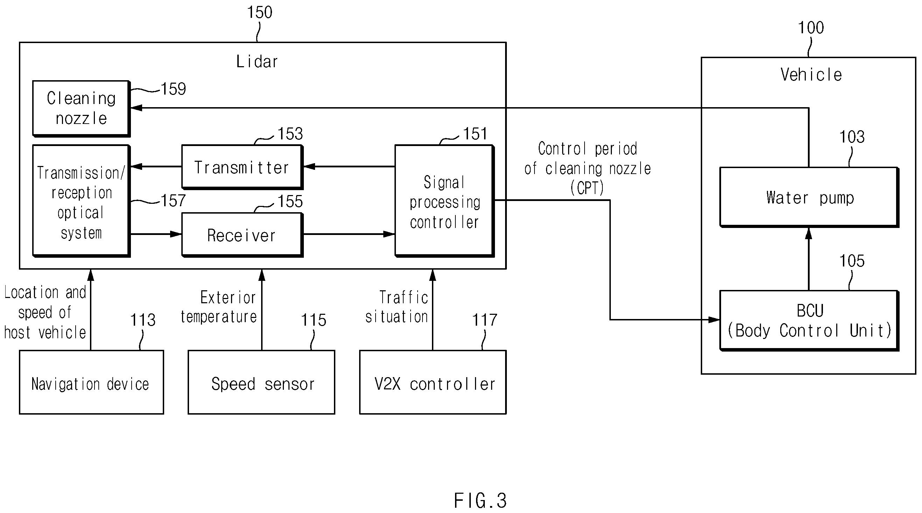

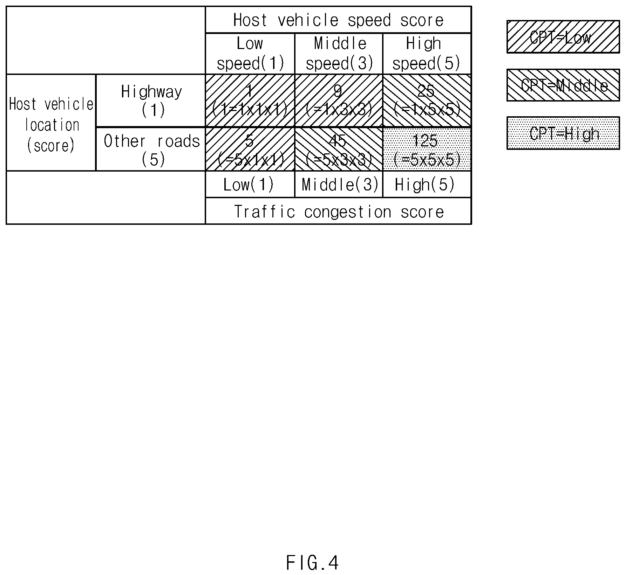

FIG. 1 is a view illustrating a vehicle, in which a lidar sensor is disposed, according to an embodiment of the present disclosure. FIG. 2 is a view illustrating a schematic configuration of a lidar sensor according to an embodiment of the present disclosure. FIG. 3 is a block diagram illustrating a vehicle, in which a lidar sensor is disposed, according to an embodiment of the present disclosure. FIG. 4 is a view illustrating a state score for setting a control period of an apparatus for cleaning a lidar sensor according to an embodiment of the present disclosure.

First, referring to FIG. 1, a light detection and ranging (lidar) sensor may be mounted on an upper side of a vehicle, front and rear bumpers of the vehicle, or side mirrors of the vehicle to sense surroundings of the vehicle and detect an object or a structure.

Referring to FIG. 2, the lidar sensor may include a transmitter (transmission of a laser beam) and a receiver (reception of the reflected laser beam), and a window for protecting a sensor from external foreign substances may be added.

In addition, the lidar sensor is a sensor that detects a distance from an object through a scheme of transmitting and receiving a light (laser beam), and thus may be very sensitive to contamination of the window.

Referring to FIG. 3, an apparatus for cleaning an object detecting sensor according to the present disclosure may include the lidar sensor 150.

The lidar sensor 150 may include a controller 151, the transmitter 153, the receiver 155, an optical system 157, and a cleaning nozzle 159.

The transmitter (laser diode) may irradiate a detection signal, and the optical system 157 may adjust a scan angle of the lidar sensor 250 as a rotational angle thereof is rotated by an actuator such as a motor, and thus the optical system 157 may reflect the irradiated detection signal and transmit the reflected detection signal to an outside.

In addition, the optical system 157 may reflect a sensing signal received from the outside and deliver the reflected sensing signal to the receiver 155.

The lidar sensor 150 may be provided with the window for protecting the lidar sensor from external substances.

The window is located in a direction, in which the detection signal is transmitted from the lidar sensor 150, and thus may be configured to accommodate the transmitter 153, the optical system 157, and the receiver 155, and may have various shapes, such as a flat surface and a curved surface, according to a manufactured shape of the lidar sensor 150.

Because the detection signal transmitted from the lidar sensor 150 and the sensing signal reflected from the outside and received by the lidar sensor 150 may pass through the window, an object sensing performance of the lidar sensor 150 may be very sensitive to contamination of the window.

Contamination of the window by the external substances may be interrupted by ejecting a washing liquid to the window through the cleaning nozzle 159, and a sensing performance of the lidar sensor 150 may be prevented from being lowered, by ejecting the washing liquid obtained by mixing a volatile washing liquid and a nonvolatile washing liquid to the window according to an operation period that is set based on driving environment information.

The controller 151 may calculate a driving state score of the vehicle 100 based on the driving environment information, and may set the operation period of the cleaning nozzle 159 based on the driving state score.

The driving environment information may be acquired through a navigation device 113, a speed sensor 115, and a vehicle-to-everything communication (V2X) controller 117. A driving environment acquirer of the apparatus may include at least one of the navigation device 113, the speed sensor 115, or the V2X controller 117.

A current location and a current speed of the vehicle 100 may be acquired through the navigation device 113, a current speed of the vehicle 100 may be acquired through the speed sensor 115, and a traffic situation, a degree of congestion an accident situation, or the like may be acquired through the V2X controller 117.

Referring to FIG. 4, the driving state score is a score according to the location of the vehicle 100, and point 1 may be given when the current location of the vehicle 100 is a highway, and point 5 may be given when the current location of the vehicle 100 is a road other than a highway.

With regard to a speed of the vehicle 100, point 1 may be given when the speed of the vehicle 100 is a low speed of a preset reference or lower, point 3 may be given when the speed of the vehicle 100 is a middle speed, and point 5 may be given when the speed of the vehicle 100 is a high speed.

With regard to a score according to the traffic situation, point 1 may be given when there is no accident and a degree of traffic congestion is low, point 3 may be given when the degree of traffic congestion is middle, and point 5 may be given when the degree of traffic congestion is high due to an accident or the like.

The controller 151 may calculate a driving state score by combining the score according to the location of the vehicle, the score according to the speed of the vehicle 100, and the score according to the traffic situation.

Accordingly, point 1 may be obtained when the vehicle 100 travels at a low speed on a highway having a low degree of traffic congestion, and point 5 may be obtained when the vehicle 100 travels at a low speed on a road other than a highway having a low degree of traffic congestion.

Point 9 may be obtained when the vehicle 100 travels at a middle speed on a highway having a middle degree of traffic congestion, and point 45 may be obtained when the vehicle 100 travels at a middle speed on a road other than a highway having a middle degree of traffic congestion.

Point 25 may be obtained when the vehicle 100 travels at a high speed on a highway having a high degree of traffic congestion, and point 125 may be obtained when the vehicle 100 travels at a high speed on a road other than a highway having a high degree of traffic congestion.

The controller 151 may set operation periods in stages by classifying the driving state score in a specific range.

For example, the stage may be set to a low stage, in which the operation period of the cleaning nozzle 159 is one time per a travel of 150 km, when the driving state score is 10 or less, the stage may be set to a middle stage, in which the operation period of the cleaning nozzle 159 is one time per a travel of 100 km, when the driving state score is more than 10 and not more than 50, and the stage may be set to a high stage, in which the operation period of the cleaning nozzle 159 is one time per a travel of 50 km, when the driving state score is more than 50.

It may be seen that the operation period of the cleaning nozzle 159 may be set to be shorter as the driving state score becomes higher, and a degree of contamination of the window becomes severer as the driving state score becomes higher.

Accordingly, the operation period of the cleaning nozzle 159 may be set to the low stage when the vehicle 100 travels at a low speed on a highway having a low degree of traffic congestion, travels at a low speed on a road other than a highway having a low degree of traffic congestion, or travels at a middle speed on a highway having a middle degree of traffic congestion, the operation period of the cleaning nozzle 159 may be set to the middle stage when the vehicle 100 travels at a middle speed on a road other than a highway having a middle degree of traffic congestion or travels at a high speed on a highway having a high degree of traffic congestion, and the operation period of the cleaning nozzle 159 may be set to the high stage when the vehicle 100 travels at a high speed on a road other than a highway having a high degree of traffic congestion.

Next, the controller 151 may transmit an operation period signal of the cleaning nozzle 159 according to the driving state score of the vehicle 100 to a body control unit (BCM) 105, and the BCM 105 that received the operation period signal may cause the washing liquid to be ejected through the cleaning nozzle 159 by driving a water pump 103.

For reference, the operation period of the cleaning nozzle 159 when an electric voltage is applied to the lidar sensor 150 by starting the vehicle 100, that is, the operation period of the cleaning nozzle 159 in an initial state, in which the driving state score of the vehicle 100 has not been applied yet, before the vehicle 100 travels may be the middle stage.

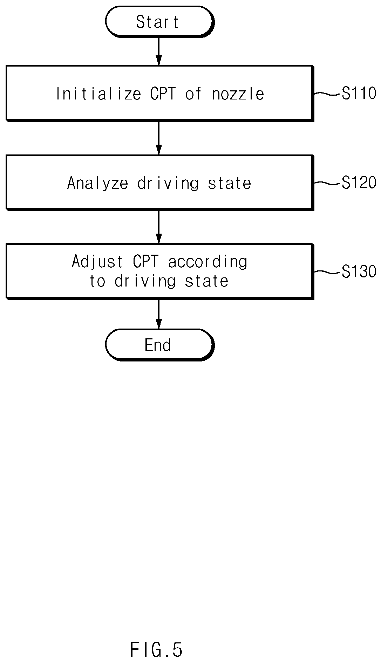

Hereinafter, a method for cleaning an object detecting sensor according to another embodiment of the present disclosure will be described with reference to FIG. 5.

FIG. 5 is a flowchart illustrating a method for cleaning an object detecting sensor according to an embodiment of the present disclosure.

Hereinafter, it will be assumed that the apparatus for cleaning the object detecting sensor of FIG. 3 performs the process of FIG. 5.

First, the operation period of the cleaning nozzle 159 may be initialized by supplying electric power to the lidar sensor 150 by starting the vehicle 100 (S110).

Next, the location and the speed of the vehicle 100 based on navigation, the speed of the vehicle 100 based on the speed sensor, or the driving environment information, such as a traffic situation, based on the V2X may be acquired while the vehicle 100 travels (S120).

Next, the driving state score of the vehicle 100 may be obtained by combining the score given according to the location of the vehicle 100 based on the driving environment information, the score given according the speed of the vehicle 100, and the score given according to the traffic situation around the vehicle 100, and the operation period of the cleaning nozzle 159 may be set based on the driving state score (S130).

Next, the washing liquid for cleaning the window of the lidar sensor 150 may be ejected according to the operation period of the cleaning nozzle 159.

As described above, according to the present disclosure, costs may be reduced by adjusting a control period time (CPT) of the lidar window cleaning nozzle in consideration of the driving state of the vehicle to efficiently use the washing liquid and reduce the number of supplementations of the washing liquid.

According to the present technology, the washing liquid may be efficiently used by adjusting a control period time (CPT) of a lidar window cleaning nozzle in consideration of a driving state of a vehicle.

In addition, the present disclosure may provide various effects that are directly or indirectly recognized.

## Claims

1. An apparatus for cleaning an object detecting sensor, the apparatus comprising:
a driving environment acquirer configured to acquire driving environment information of a vehicle (100) the driving environment information includes at least one of a location and a speed of the vehicle (100) based on navigation, a speed of the vehicle (100) based on a speed sensor (115), or a traffic situation based on vehicle-to-everything communication (V2X);
a cleaning nozzle (159) configured to eject a washing liquid for cleaning the object detecting sensor according to an operation period of the cleaning nozzle (159), the operation period being set based on the driving environment information; and
a controller (151) configured to calculate a driving state score of the vehicle (100) based on the driving environment information and to set the operation period of the cleaning nozzle (159) based on the driving state score **characterized in that**
the controller (151) calculates the driving state score by combining a score given according to the location of the vehicle (100), a score given according to the speed of the vehicle (100), and a score given according to the traffic situation around the vehicle (100).

2. The apparatus of claim 1, wherein the object detecting sensor includes a lidar sensor (150).

3. The apparatus of claim 1, wherein the washing liquid is a mixture of a volatile washing liquid and a nonvolatile washing liquid.

4. The apparatus of claim 1, wherein the controller (151) sets the operation period of the cleaning nozzle (159) to be shorter as the driving state score becomes higher.

5. A method for cleaning an object detecting sensor, the method comprising:
acquiring driving environment information of a vehicle (100); wherein the acquiring of the driving environment information of the vehicle (100) includes:
acquiring at least one of a location and a speed of the vehicle (100) based on navigation, a speed of the vehicle (100) based on a speed sensor (115), or a traffic situation based on vehicle-to-everything communication (V2X);
calculating a driving state score of the vehicle (100) based on the driving environment information;
setting an operation period of a cleaning nozzle (159) based on the driving state score; and
ejecting a washing liquid for cleaning the object detecting sensor according to the operation period **characterized in that**
the calculating of the driving state score of the vehicle (100) includes:
calculating the driving state score by combining a score given according to the location of the vehicle (100), a score given according to the speed of the vehicle (100), and a score given according to the traffic situation around the vehicle (100).

6. The method of claim 5, wherein the setting of the operation period of the cleaning nozzle (159) based on the driving state score includes:
setting the operation period of the cleaning nozzle (159) to be shorter as the driving state score becomes higher.

## Patentansprüche

1. Vorrichtung zum Reinigen eines Objekterkennungssensors, wobei die Vorrichtung aufweist:
eine Fahrumgebungserfassungsvorrichtung, die dazu ausgebildet ist, Fahrumgebungsinformationen eines Fahrzeugs (100) zu erfassen, wobei die Fahrumgebungsinformationen eine Position und eine Geschwindigkeit des Fahrzeugs (100) basierend auf der Navigation und/oder eine Geschwindigkeit des Fahrzeugs (100) basierend auf einem Geschwindigkeitssensor (115) und/oder eine Verkehrssituation basierend auf Vehicle-to-everything-Kommunikation (V2X) aufweisen;
eine Reinigungsdüse (159), die dazu ausgebildet ist, eine Waschflüssigkeit zum Reinigen des Objekterkennungssensors entsprechend einer Betriebszeitspanne der Reinigungsdüse (159) auszustoßen, wobei die Betriebszeitspanne basierend auf den Fahrumgebungsinformationen eingestellt wird; und
eine Steuerung (151), die dazu ausgebildet ist, eine Fahrzustandsbewertung des Fahrzeugs (100) basierend auf den Fahrumgebungsinformationen zu berechnen und die Betriebszeitspanne der Reinigungsdüse (159) basierend auf der Fahrzustandsbewertung eingestellt wird,
**dadurch gekennzeichnet,**
**dass** die Steuerung (151) die Fahrzeugzustandsbewertung durch Kombinieren einer entsprechend der Position des Fahrzeugs (100) gegeben Bewertung, einer entsprechend der Geschwindigkeit des Fahrzeugs (100) gegebenen Bewertung, und einer entsprechend der um das Fahrzeug (100) bestehenden Verkehrssituation gegebenen Bewertung berechnet.

2. Vorrichtung nach Anspruch 1, bei welcher der Objekterkennungssensor einen Lidar-Sensor (150) aufweist.

3. Vorrichtung nach Anspruch 1, bei welcher die Waschflüssigkeit eine Mischung aus einer flüchtigen Waschflüssigkeit und einer nichtflüchtigen Waschflüssigkeit ist.

4. Vorrichtung nach Anspruch 1, bei welcher die Steuerung (151) die Betriebszeitspanne der Reinigungsdüse (159) mit steigender Fahrzustandsbewertung kürzer einstellt.

5. Verfahren zum Reinigen eines Objekterkennungssensors, wobei das Verfahren die folgenden Schritte aufweist:
Erfassen von Fahrumgebungsinformationen eines Fahrzeugs (100); wobei das Erfassen der Fahrumgebungsinformationen des Fahrzeugs (100) die folgenden Schritte aufweist:
Erfassen einer Position und einer Geschwindigkeit des Fahrzeugs (100) basierend auf der Navigation und/oder einer Geschwindigkeit des Fahrzeugs (100) basierend auf einem Geschwindigkeitssensor (115) und/oder einer Verkehrssituation basierend auf Vehicle-to-everything-Kommunikation (V2X);
Berechnen einer Fahrzustandsbewertung des Fahrzeugs (100) basierend auf den Fahrumgebungsinformationen;
Einstellen einer Betriebszeitspanne einer Reinigungsdüse (159) basierend auf der Fahrzustandsbewertung; und
Ausstoßen einer Waschflüssigkeit zum Reinigen des Objekterkennungssensors entsprechend der Betriebszeitspanne,
**dadurch gekennzeichnet,**
**dass** das Berechnen der Fahrzustandsbewertung des Fahrzeugs (100) den folgenden Schritt aufweist:
Berechnen der Fahrzeugzustandsbewertung durch Kombinieren einer entsprechend der Position des Fahrzeugs (100) gegeben Bewertung, einer entsprechend der Geschwindigkeit des Fahrzeugs (100) gegebenen Bewertung, und einer entsprechend der um das Fahrzeug (100) bestehenden Verkehrssituation gegebenen Bewertung.

6. Verfahren nach Anspruch 5, bei welchem das Einstellen der Betriebszeitspanne der Reinigungsdüse (159) basierend auf der Fahrzustandsbewertung den folgenden Schritt aufweist:
Einstellen der Betriebszeitspanne der Reinigungsdüse (159) derart, dass diese mit steigender Fahrzustandsbewertung kürzer ist.

## Revendications

1. Appareil pour nettoyer un capteur de détection d'objet, l'appareil comprenant :
un acquéreur d'environnement de conduite configuré pour acquérir des informations d'environnement de conduite d'un véhicule (100), les informations d'environnement de conduite incluent au moins l'une parmi une localisation et une vitesse du véhicule (100) basées sur la navigation, une vitesse du véhicule (100) basée sur un capteur de vitesse (115), ou une situation de trafic basée sur la communication de véhicule à tout (V2X) ;
une buse de nettoyage (159) configurée pour éjecter un liquide de lavage pour nettoyer le capteur de détection d'objet selon une période de fonctionnement de la buse de nettoyage (159), la période de fonctionnement étant définie sur la base des informations d'environnement de conduite ; et
un contrôleur (151) configuré pour calculer un score d'état de conduite du véhicule (100) sur la base des informations d'environnement de conduite et pour définir la période de fonctionnement de la buse de nettoyage (159) sur la base du score d'état de conduite
**caractérisé en ce que**
le contrôleur (151) calcule le score d'état de conduite en combinant un score donné selon la localisation du véhicule (100), un score donné selon la vitesse du véhicule (100), et un score donné selon la situation de trafic autour du véhicule (100).

2. Appareil selon la revendication 1, dans lequel le capteur de détection d'objet inclut un capteur lidar (150).

3. Appareil selon la revendication 1, dans lequel le liquide de lavage est un mélange d'un liquide de lavage volatil et d'un liquide de lavage non volatil.

4. Appareil selon la revendication 1, dans lequel le contrôleur (151) définit la période de fonctionnement de la buse de nettoyage (159) pour qu'elle soit plus courte lorsque le score d'état de conduite devient plus élevé.

5. Procédé de nettoyage d'un capteur de détection d'objet, le procédé comprenant :
l'acquisition d'informations d'environnement de conduite d'un véhicule (100) ; dans lequel l'acquisition des informations d'environnement de conduite du véhicule (100) inclut :
l'acquisition d'au moins une parmi une localisation et une vitesse du véhicule (100) basées sur la navigation, une vitesse du véhicule (100) basée sur un capteur de vitesse (115), ou une situation de trafic basée sur une communication de véhicule à tout (V2X) ;
le calcul d'un score d'état de conduite du véhicule (100) sur la base des informations d'environnement de conduite ;
la définition d'une période de fonctionnement d'une buse de nettoyage (159) sur la base du score d'état de conduite ; et
l'éjection d'un liquide de lavage pour nettoyer le capteur de détection d'objet selon la période de fonctionnement
**caractérisé en ce que**
le calcul du score d'état de conduite du véhicule (100) inclut :
le calcul du score d'état de conduite en combinant un score donné selon la localisation du véhicule (100), un score donné selon la vitesse du véhicule (100), et un score donné selon la situation de trafic autour du véhicule (100).

6. Procédé selon la revendication 5, dans lequel la définition de la période de fonctionnement de la buse de nettoyage (159) sur la base du score d'état de conduite inclut :
la définition de la période de fonctionnement de la buse de nettoyage (159) pour qu'elle soit plus courte lorsque le score d'état de conduite devient plus élevé.
